(19) Europäisches Patentamt
European Patent Office
Office européen des brevets

(11) **EP 4 765 248 A1**

(12) **EUROPEAN PATENT APPLICATION**
published in accordance with Art. 153(4) EPC

(43) Date of publication:
**24.06.2026 Bulletin 2026/26**

(21) Application number: 25749025.0

(22) Date of filing: **24.01.2025**

(51) International Patent Classification (IPC):
*H01M 4/525* (2010.01)  *H01M 4/131* (2010.01)
*H01M 4/36* (2006.01)  *H01M 10/052* (2010.01)
*C01G 53/50* (2025.01)  *H01M 4/02* (2006.01)

(52) Cooperative Patent Classification (CPC):
**C01G 53/50; C01G 53/506; H01M 4/02;
H01M 4/131; H01M 4/36; H01M 4/505;
H01M 4/525; H01M 10/052; H01M 10/0525**

(86) International application number:
**PCT/KR2025/001500**

(87) International publication number:
**WO 2025/165122 (07.08.2025 Gazette 2025/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2024 KR 20240014418**

(71) Applicant: **LG Energy Solution, Ltd.
Seoul 07335 (KR)**

(72) Inventors:
• **LEE, Seok Jin
Daejeon 34122 (KR)**

• **LHO, Eun Sol
Daejeon 34122 (KR)**
• **HWANG, Jin Tae
Daejeon 34122 (KR)**
• **KIM, Hyeong Il
Daejeon 34122 (KR)**
• **OH, Su Yeon
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE MATERIAL POWDER AND MANUFACTURING METHOD FOR POSITIVE ELECTRODE MATERIAL POWDER**

(57)    The present invention relates to positive electrode material powder including a single particle type lithium nickel-based oxide in which an amount of nickel among metals excluding lithium is 80 mol% or more, wherein the positive electrode material powder has a $D_{50}$ of 5.0 μm or more, and has a crystal strain of $280 \times 10^{-6}$ or less, and a method of preparing the same.

[FIG. 1]

EP 4 765 248 A1

**Description**

**TECHNICAL FIELD**

This application claims priority from Korean Patent Application No. 10-2024-0014418, filed on January 30, 2024, the disclosures of which are incorporated by reference herein.

The present invention relates to positive electrode material powder with controlled $D_{50}$ and crystal strain, a method of preparing the same, and a positive electrode and a lithium secondary battery which include the positive electrode material powder.

**BACKGROUND ART**

Research and development efforts for improving performance of lithium secondary batteries have been actively conducted as industries using the lithium secondary batteries, such as mobile phones, notebook computers, and electric vehicles. The lithium secondary battery produces electrical energy by oxidation and reduction reactions when lithium ions are intercalated/deintercalated into/from a positive electrode and anegative electrode.

Lithium cobalt oxide, lithium nickel oxide, lithium manganese oxide,and a lithium iron phosphate compound have mainly been used as a positive electrode active material of the lithium secondary battery. Also, as a method to improve low thermal stability while maintaining excellent reversible capacity of the lithium nickel oxide, a lithium composite metal oxide (hereinafter, simply referred to as 'NCM oxide'), in which a portion of nickel is substituted with cobalt and manganese, has been developed.

Recently, attempts to increase a nickel content in the NCM oxide are being actively made as demand for high-output, high-capacity batteries, such as batteries for electric vehicles, increases. However, since high-Ni NCM oxide has large instability in lattice structure due to cation mixing and oxygen desorption and has a large amount of lithium impurities remaining on its surface, its application as a positive electrode material is limited in that a large amount of gas is generated during high-temperature storage or charge and discharge processes.

**DISCLOSURE OF THE INVENTION**

**TECHNICAL PROBLEM**

The present invention aims to provide positive electrode material powder capable of simultaneously achieving high capacity characteristics, particle durability, and resistance characteristics and a method of preparing the same.

**TECHNICAL SOLUTION**

[1] The present invention provides positive electrode material powder including a single particle type lithium nickel-based oxide in which an amount of nickel among metals excluding lithium is 80 mol% or more, wherein the positive electrode material powder has a $D_{50}$ of 5.0$\mu$m or more, and has a crystal strain of $280 \times 10^{-6}$ or less.

[2] The present invention provides the positive electrode material powder of [1] above, wherein a cation mixing ratio of the positive electrode material powder is 1.0 at% or less.

[3] The present invention provides the positive electrode material powder of [1]or [2] above, wherein a particle size reduction rate (K) according to Equation 1 of the positive electrode material powder isin a range of 20% to 30%.

[Equation 1]

$$\text{Particle size reduction rate (K)} = \frac{D_{50} - D_{50}'}{D_{50}} \times 100(\%)$$

In Equation 1,

$D_{50}$ is the $D_{50}$ of the positive electrode material powder, and
$D_{50}'$ is $D_{50}$ measured after putting the positive electrode material powder into a circular mold with a diameter of 13 mm and pressing the positive electrode material powder with a force of 9 tons.

[4] The present invention provides the positive electrode material powder of at least one of [1] to [3] above, wherein the positive electrode material powder has a $D_{min}$ of .5 $\mu$m or more.

[5] The present invention provides the positive electrode material powder of at least one of [1] to [4] above, wherein the positive electrode material powder has a $D_{max}$ of 10 $\mu$m to 20 $\mu$m.

[6] The present invention provides the positive electrode material powder of at least one of [1] to [5] above, wherein pellet density of the positive electrode material powder is 3.50 g/cc or more, wherein, after a pellet is prepared by putting the positive electrode material powder in a circular mold with a diameter of 13 mm and pressing the positive electrode material powder with a force of 9 tons, the pellet density is a value obtained by dividing a weight of the positive electrode material powder by a volume of the pellet.

[7] The present invention provides the positive electrode material powder of at least one of [1] to [6] above, wherein tap density of the positive electrode material powder is in a range of 2.00 g/cc to 2.50 g/cc.

[8] The present invention provides the positive electrode material powder of at least one of [1] to [7] above, wherein the lithium nickel-based oxide has a composition of Formula 1.

[9] The present invention provides the positive electrode material powder of at least one of [1] to [8] above, wherein the amount of the nickel among the metals excluding lithium of the lithium nickel-based oxide is 85 mol% or more.

[10] The present invention provides the positive electrode material powder of at least one of [1] to [9] above, wherein the positive electrode material powder further includes a coating layer including a cobalt (Co) element on a surface of the lithium nickel-based oxide particle.

[11] The present invention provides a method of preparing the positive electrode material powder of at least one of [1] to [10] above which includes the steps of: preparing a mixture by mixing a precursor having an amount of nickel of 80 mol% or more with a lithium raw material; performing primary sintering on the mixture at 750°C to 890°C; and performing secondary sintering on a sintered body subjected to the primary sintering at 660°C to 750°C for 9 hours to 14 hours.

[12] The present invention provides the method of [11] above, wherein the method further includes a step of milling a sintered body subjected to the secondary sintering at a speed of 1,000 rpm to 2,500 rpm.

[13] The present invention provides the method of [11] or [12] above, wherein the method does not include a washing step after the secondary sintering.

[14] The present invention provides a positive electrode including the positive electrode material powder of at least one of [1] to [10] above.

[15] The present invention provides a lithium secondary battery including the positive electrode of [14] above; a negative electrode including a negative electrode active material; a separator disposed between the positive electrode and the negative electrode; and an electrolyte.

## ADVANTAGEOUS EFFECTS

The present invention provides numerical ranges of $D_{50}$ and crystal strain which may optimize a particle size reduction rate before/after rolling of positive electrode material powder including a high-nickel (high-Ni) lithium nickel-based oxide. Since the particle size reduction rate of positive electrode material powder, in which the $D_{50}$ and crystal strain satisfy the ranges of the present invention, is optimized, the positive electrode material powder is advantageous in that lithium mobility is excellent and generation of fine powder during a rolling process is less.

Thus, the positive electrode material powder may contribute to improving cycle performance of a lithium secondary battery and reducing a gas generation amount during high-temperature storage.

## BRIEF DESCRIPTION OF THE DRAWINGS

FIG. 1 is scanning electron microscope (SEM) images of positive electrode material powder prepared in Example 1.
FIG. 2 is SEM images of positive electrode material powder prepared in Example 2.
FIG. 3 is SEM images of positive electrode material powder prepared in Comparative Example 1.
FIG. 4 is SEM images of positive electrode material powder prepared in Comparative Example 2.
FIG. 5 is SEM images of positive electrode material powder prepared in Comparative Example 3.
FIG. 6 is a view illustrating volume changes of cells, in which the positive electrode material powders of the examples and the comparative examples are used, according to high-temperature storage.
FIG. 7 is SEM images of positive electrode material powder prepared in Comparative Example4.

## MODE FOR CARRYING OUT THE INVENTION

Hereinafter, the present invention will be described in more detail to allow for a clearer understanding of the present invention.

In the present invention, a "single particle type" denotes a particle composed of 30 or less nodules, wherein it is a concept that includes a single particle composed of one nodule and a pseudo-single particle as a composite of 2 to 30 nodules.

The "nodule" is a sub-particle unit constituting the single particle and the pseudo-single particle, wherein the nodule may be a single crystal without a crystalline grain boundary, or may be a polycrystal in which grain boundaries do not exist in appearance when observed by using a scanning electron microscope with a field of view of 5,000 times to 20,000 times.

In the present invention, a "particle" is a concept including any one or all of the single particle, the pseudo-single particle, a primary particle, and the nodule.

In the present invention, "$D_{50}$" "$D_{min}$", and "$D_{max}$" mean a particle size corresponding to 50% of volume accumulation, a minimum particle size, and a maximum particle size in a volume cumulative particle size distribution of corresponding powder, respectively, wherein they may be measured using a laser diffraction method. For example, after dispersing positive electrode active material powder in a dispersion medium, the dispersion medium is introduced into a commercial laser diffraction particle size measurement instrument (e.g., Malvern Panalytical Ltd., Mastersizer 3000) and irradiated with ultrasonic waves of about 28 kHz at an output of 60 W to obtain a volume cumulative particle size distribution graph, and the $D_{50}$ may be measured by a method in which a particle diameter at 50% of volume accumulation in the obtained volume cumulative particle size distribution graph is obtained.

A "cation mixing ratio" in the present invention means a ratio (at%) of nickel ions ($Ni^{2+}$) mixed in based on a total amount of lithium sites (Li sites) in a lithium layer of a layer-structured lithium nickel-based oxide, and may be measured through X-ray diffraction (XRD) analysis.

"at%" in the present invention means an atomic percentage.

"Crystal strain" in the present invention is a value indicating lattice distortion caused by a defect, i.e., a degree of crystal lattice deformation, wherein it a dimensionless number, and may be measured through Rietveld refinement analysis of XRD data.

After putting a sample in a groove of a holder for general powder, leveling a surface of the sample using a slide glass, and filling the sample such that a sample height matches an edge of the holder, the X-ray diffraction analysis may be performed using a fixed divergence slit (FDS) of 0.5° and a $2\theta$ range of 15° to 90° under conditions, in which a step size is 0.02° and total scan time is about 20 minutes, using a Bruker D8 Endeavor (light source: $CuK\alpha$, $\lambda$=1.54Å) equipped with a LynxEye XE-Tposition sensitive detector. Rietveld refinement is performed on the measured data in consideration of charge at each site (metals at transition metal sites are +3, Ni at a Li site is +2) and cation mixing. Instrumental broadening during the analysis uses Fundamental Parameter Approach (FPA) implemented ina Bruker TOPAS program, and entire peaks in the measurement range are used during fitting. A peak shape is fitted using only Lorentzian contribution as a first principle (FP) among peak types available in the TOPAS.

In the present invention, "pellet density" may be obtained by a method in which, after a certain amount of a sample is put in a cylindrical load cell or a circular mold and a force is applied to press it into a shape of a pellet, density is calculated from weight and volume of the pellet. For example, the pellet density may be measured using an automatic pellet press (Auto Pellet Press, 3887.4) by Carver, Inc. or a pellet press (Pellet Press, 4350.L) by Carver, Inc.

In the present invention, "tap density" may be measured by a method generally used in the art, as a method for measuring a degree of packing the sample per unit volume. For example, the tap density may be density (sample weight/volume) which is calculated from an amount of volume changed by applying a constant force to a measurement container containing the sample in accordance with measuring equipment and method specified in ASTM B527. Specifically, the tap density may be measured by vibrating horizontally until a force of 108 N is applied using a GEOPYC 1360 tap density analyzer by Micromeritics Instrument Corporation.

Hereinafter, each component of the present invention will be described in more detail.

## Positive Electrode Material Powder

Positive electrode material powder according to an embodiment of the present invention includes a single particle type lithium nickel-based oxide in which an amount of nickel among metals excluding lithium is 80 mol% or more, wherein the positive electrode material powder has a $D_{50}$ of 5 $\mu$m or more, and has a crystal strain of $280\times10^{-6}$ or less.

In order to overcome the above-described limitation of the high-Ni positive electrode material in the present invention, the positive electrode material has been controlled to be in a form of a single particle rather than in a form of a conventional secondary particle in which tens to hundreds of particles are aggregated. Since a contact area between the positive electrode material in the form of a single particle and an electrolyte solution is smaller than that between the positive electrode material in the form of a secondary particle and the electrolyte solution, particle strength is excellent while a side reaction with the electrolyte solution is less so that particle cracking is reduced during an electrode preparation process, and thus, it may contribute to reducing a gas generation amount of a lithium secondary battery.

However, the positive electrode material in the form of a single particle has relatively unfavorable characteristics in terms of resistance due to the fact that lithium mobility is low because an interface between primary particles, which becomes a movement path of lithium ions in the particle, is less, that a surface structure is easily changed to a rock-salt phase, that is an electrochemically inactive phase, because the positive electrode material in the form of a single particle is prepared at a relatively high sintering temperature, and that an excessive amount of lithium byproduct remains on a surface due to the high sintering temperature and a washing process introduced to remove the lithium byproduct damages the surface structure.

That is, it is a difficult task to obtain a positive electrode material that has excellent balance in capacity characteristics, particle durability, and resistance characteristics rather than being biased toward a particular property.

Thus, the present inventors introduced $D_{50}$ and crystal strain of positive electrode material powder as indicators for selecting this positive electrode material, and confirmed that, in a case in which the $D_{50}$ is 5.0 $\mu$m or more and the crystal strain is $280 \times 10^{-6}$ or less in a positive electrode material having an amount of nickel of 80 mol% or more and being in the form of a single particle, the capacity characteristics, particle durability, and resistance characteristics may all be secured above a certain level.

Specifically, in a case in which the crystal strain of the positive electrode material powder is greater than $280 \times 10^{-6}$, since structural stability is reduced, there is a problem in that initial charge capacity decreases.

However, in a case in which the $D_{50}$ of the positive electrode material powder is less than 5 $\mu$m, since it is difficult to secure electrical conductivity due to low density between particles and it is difficult to maintain high-temperature durability due to an increase in amount of fine powder generated during rolling, the same effect may not be achieved even if the range of the crystal strain is satisfied. Also, with respect to the single particle having a $D_{50}$ of less than 5 $\mu$m, since the amount of the fine powder increases due to high crushing strength, this may lead to a reduction in phase stability of a slurry, a decrease in solid content during electrode coating, slurry gelation, and an increase in viscosity, and, since this may affect coating speed, this may also have an adverse effect on process productivity. Specifically, the positive electrode material powder may have a $D_{50}$ of 5.0 $\mu$m to 8.5 $\mu$m, particularly 5.0 $\mu$m to 7.0 $\mu$m, and more particularly 5.0 $\mu$m to 6.0 $\mu$m.

A cation mixing ratio of the positive electrode material powder may be 1.0 at% or less, 0.8 at% or less, 0.5 at% or less, 0.3 at% or less, or 0.1 at% or less. Since the positive electrode material powder according to the present invention has low crystal strain and optimized $D_{50}$, stability of a crystal structure is excellent and a particle size is uniformly maintained, and thus, a low cation mixing ratio may be achieved. Since cation mixing refers to a phenomenon in which $Li^+$ and $Ni^{2+}$, which have similar ionic radii, switch sites to form a crystal, if the cation mixing ratio is high, $Ni^{2+}$ present in a space layer of $Li^+$ may act as a resistance component during intercalation and deintercalation of the $Li^+$ to reduce charge and discharge efficiency, and thus, it is desirable that the cation mixing ratio is 1.0 at% or less.

A particle size reduction rate (K) according to Equation 1 below of the positive electrode material powder may be in a range of 20% to 30%.

[Equation 1]

$$\text{Particle size reduction rate (K)} = \frac{D_{50} - D_{50}'}{D_{50}} \times 100 (\%)$$

In Equation 1,

$D_{50}$ is the $D_{50}$ of the positive electrode material powder, and
$D_{50}'$ is $D_{50}$ measured after putting the positive electrode material powder into a circular mold with a diameter of 13 mm and pressing the positive electrode material powder with a force of 9 tons.

In a case in which the $D_{50}$ is 5.0 $\mu$m or more and the crystal strain is $280 \times 10^{-6}$ or less, since the stability of the crystal structure and the uniformity of the particle size are simultaneously secured to minimize particle crushing, the particle size reduction rate may be controlled as described above.

In a case in which the particle size reduction rate (K) is less than 20%, since the interface between the primary particles, which becomes a diffusion path of lithium ions in the particle, is less, the diffusion path of the lithium ions is increased to reduces the lithium mobility, and thus, an increase in resistance as cycles progress may be intensified. Also, in a case in which the particle size reduction rate (K) is greater than 30%, since the amount of the fine powder generated during rolling increases due to small-sized single particles remaining after filling gaps between large-sized single particles, a gas generation amount during high-temperature storage is increased and life characteristics may be degraded.

Preferably, the particle size reduction rate (K) may be in a range of 21% to 29%, more preferably, 23% to 28%.

$D_{50}$ and $D_{50}'$ in Equation 1 represent particle sizes of the positive electrode material powder before and after rolling during preparation of an electrode, respectively.

$D_{min}$ of the positive electrode material powder may be 0.5 $\mu$m or more, specifically, 0.6 $\mu$m or more, and may be 2.0 $\mu$m or less, or 1.5 $\mu$m or less. Also, $D_{max}$ of the positive electrode material powder may be in a range of 10 $\mu$m to 20 $\mu$m, specifically, 11 $\mu$m to 15 $\mu$m.

Pellet density of the positive electrode material powder may be 3.50 g/cc or more, preferably 3.55 g/cc or more, and more preferably 3.60 g/cc or more, and, in this case, since rollability is excellent, it is easy to achieve high density. However, when considering practical rolling conditions that may be applied to the single particles with a $D_{50}$ of 5.0 $\mu$m or more, the pellet density may be 3.75 g/cc or less.

Also, tap density of the positive electrode material powder may be in a range of 2.00 g/cc to 2.50 g/cc, preferably 2.10 g/cc to 2.50 g/cc, and more preferably 2.20 g/cc to 2.40 g/cc.

When the pellet density and the tap density are within the above ranges, energy density may be improved by adjusting rolling density to a desirable level.

According to an embodiment of the present invention, an amount of nickel among metals excluding lithium of the lithium nickel-based oxide may be 85 mol% or more, preferably 90 mol% or more, and more preferably 93 mol% or more, but may be 99 mol% or less. In this case, there is an advantage of being able to achieve high capacity.

Also, the lithium nickel-based oxide may have a composition of Formula 1 below.

[Formula 1] $\quad\quad\quad Li_{1+x}(Ni_a Co_b M^1_c M^2_d)O_2$

In Formula 1,

$M^1$ is manganese (Mn), aluminum (Al), or a combination thereof,

$M^2$ is at least one selected from the group consisting of barium (Ba), calcium (Ca), zirconium (Zr), titanium (Ti), magnesium (Mg), tantalum (Ta), niobium (Nb), molybdenum (Mo), tungsten (W), copper (Cu), iron (Fe), vanadium (V), chromium (Cr), zinc (Zn), indium (In), yttrium (Y), lanthanum (La), strontium (Sr), gallium (Ga), scandium (Sc), gadolinium (Gd), samarium (Sm), cerium (Ce), and boron (B), and

x, a, b, c, and d respectively satisfy $0 \le x \le 0.50$, $0.80 \le a < 1$, $0 < b \le 0.20$, $0 < c \le 0.20$, $0 \le d \le 0.10$, and $a+b+c+d=1$.

$1+x$ represents a molar ratio of lithium in the lithium nickel-based oxide, wherein x may satisfy $0 \le x \le 0.20$ or $0 \le x \le 0.10$. When the molar ratio of the lithium satisfies the above range, a crystal structure may be stably formed.

a represents a molar ratio of nickel among total metals excluding lithium in the lithium nickel-based oxide, wherein a may satisfy $0.85 \le a < 1$, $0.90 \le a < 1$, or $0.93 \le a < 1$. When the molar ratio of the nickel satisfies the above range, high energy density may be exhibited to achieve high capacity.

b represents a molar ratio of cobalt among the total metals excluding lithium in the lithium nickel-based oxide, wherein b may satisfy $0 < b \le 0.12$, $0 < b \le 0.09$, or $0 < b \le 0.07$. When the molar ratio of the cobalt satisfies the above range, good resistance characteristics and output characteristics may be achieved.

c represents a molar ratio of element $M^1$ among the total metals excluding lithium in the lithium nickel-based oxide, wherein c may satisfy $0 < c \le 0.12$, $0 < c \le 0.07$, or $0 < c \le 0.05$. $M^1$ may be Mn; or a combination of Mn and Al, and may preferably be Mn.

d represents a molar ratio of element $M^2$ among the total metals excluding lithium in the lithium nickel-based oxide, wherein d may satisfy $0 \le d \le 0.08$, $0 \le d \le 0.05$, or $0 \le d \le 0.03$.

The positive electrode material powder may include a coating layer including a cobalt (Co) element on a surface of the lithium nickel-based oxide particle. More specifically, the coating layer may include $Li_e CoO_2$ $(0 < e < 1)$ which is a reaction product of Co and a lithium byproduct. In this case, since a contact between the lithium nickel-based oxide and the electrolyte solution is suppressed by the coating layer, a side reaction with the electrolyte solution is reduced, and as a result, an effect of improving the life characteristics may be obtained.

The positive electrode material powder may be a single particle composed of one nodule and/or a pseudo-single particle as a composite of 30 or less, preferably 2 to 20, and more preferably 2 to 10 nodules, or may be in a form including these. Preferably, the positive electrode material powder according to the present invention may be composed of a combination of positive electrode active material particles in the form of a single particle and a pseudo-single particle. The reason for this is that, in a case in which the number of nodules constituting the positive electrode active material particle is greater than 30, since the particle cracking increases during the preparation of the electrode and occurrence of internal cracks due to volume expansion/contraction of the nodules is increased during charge and discharge, an effect of improving high-temperature storage characteristics may be reduced.

## Method of Preparing Positive Electrode Material Powder

Hereinafter, a method of preparing positive electrode material powder according to the present invention will be described.

The method of preparing positive electrode material powder according to an embodiment of the present invention includes the steps of: preparing a mixture by mixing a precursor having an amount of nickel of 80 mol% or more with a lithium raw material; performing primary sintering on the mixture at 750°C to 890°C; and performing secondary sintering on a sintered body subjected to the primary sintering at 660°C to 750°C for 9 hours to 14 hours.

Next, each step will be described.

In the step of preparing a mixture by mixing a precursor having an amount of nickel of 80 mol% or more with a lithium raw material, first, the precursor having an amount of nickel of 80 mol% or more is mixed with the lithium raw material in a reactor.

The precursor may be in a form of a hydroxide, oxide or carbonate, may specifically be in the form of a hydroxide, and may more specifically have a composition of Formula 2 below.

$$[\text{Formula 2}] \qquad Ni_{a1}Co_{b1}M^1_{c1}M^2_{d1}(OH)_2$$

In Formula 2,

$M^1$ is Mn, Al, or a combination thereof,
$M^2$ is at least one selected from the group consisting of Ba, Ca, Zr, Ti, Mg, Ta, Nb, Mo, W, Cu, Fe, V, Cr, Zn, In, Y, La, Sr, Ga, Sc, Gd, Sm, Ce, and B,
a1, b1, c1, and d1 respectively satisfy $0.80 \le a1 < 1$, $0 < b1 \le 0.20$, $0 \le c1 \le 0.20$, $0 \le d1 \le 0.10$, and $a1+b1+c1+d1=1$.

a1 represents a molar ratio of nickel among total metals in the precursor, wherein a1 may satisfy $0.85 \le a1 < 1$, $0.90 \le a1 < 1$, or $0.93 \le a1 < 1$.

b1 represents a molar ratio of cobalt among the total metals in the precursor, wherein b1 may satisfy $0 < b1 \le 0.12$, $0 < b1 \le 0.09$, or $0 < b1 \le 0.07$.

c1 represents a molar ratio of element $M^1$ among the total metals in the precursor, wherein c1 may satisfy $0 < c1 \le 0.12$, $0 < c1 \le 0.07$, or $0 < c1 \le 0.05$. $M^1$ may be Mn; or a combination of Mn and Al.

d1 represents a molar ratio of element $M^2$ among the total metals in the precursor, wherein d1 may satisfy $0 \le d1 \le 0.08$, $0 \le d1 \le 0.05$, or $0 \le d1 \le 0.03$.

A commercially available precursor may be purchased and used as the precursor, or the precursor may be prepared according to a method of preparing a precursor which is known in the art and used.

As the lithium raw material, lithium-containing sulfates, nitrates, acetic acid salts, carbonates, oxalates, citrates, halides, hydroxides, or oxyhydroxides may be used, and, for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

The lithium raw material and the precursor may be mixed such that a molar ratio of lithium (Li):total metals in the precursor is in a range of 1:1 to 1.2:1, preferably, 1:1 to 1.1:1. When the mixing ratio of the lithium raw material to the metals in the precursor satisfies the above range, since a layered crystal structure of the lithium nickel-based oxide is well developed, a positive electrode material having excellent capacity characteristics and structural stability may be prepared.

Next, the step of sintering the mixture to prepare a single particle type sintered body is performed. Specifically, the sintering includes primary sintering and secondary sintering, and the primary sintering may be performed by sintering the mixture at 750°C to 890°C, preferably 800°C to 890°C, and more preferably 800°C to 850°C for 8 hours to 16 hours in an oxygen atmosphere. The primary sintering is a step of increasing structural perfection of the lithium nickel-based oxide and of single particle formation, wherein considering that the higher the sintering temperature is, the better the particle growth reaction occurs to increase a degree of single particle formation, it is desirable that the primary sintering temperature is 750°C or higher. However, considering that reactivity between the precursor and the lithium raw material decreases when oversintering occurs in the primary sintering, and that, if an amount of $Li_2O$ is increased due to high-temperature sintering, it is easily converted to LiOH, and the LiOH may be easily converted to $Li_2CO_3$ to cause the side reaction with the electrolyte solution and gas generation, it is desirable that the primary sintering temperature is 890°C or less. Herein, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

The secondary sintering may be performed on a sintered body subjected to the primary sintering at 600°C to 750°C, preferably 660°C to 720°C, and more preferably 680°C to 700°C in an oxygen atmosphere. Also, the secondary sintering may be performed for 9 hours to 14 hours, preferably 10 hours to 14 hours, and more preferably 10 hours to 12 hours. Since the secondary sintering is performed to increase the degree of single particle formation, it is desirable that the temperature of the secondary sintering is 660°C or higher, but considering that excessively high sintering temperature may increase strain and cation mixing ratio, it is desirable that the secondary sintering temperature is not greater than 750°C.

A coating raw material containing a Co element may be added during the secondary sintering, and, in this case, the lithium byproduct remaining on a surface of the sintered body reacts with the coating raw material to form a coating layer containing an LCO-like phase, specifically, $Li_eCoO_2(0<e<1)$ on the surface of the lithium nickel-based oxide particle. Since not only does the coating layer including the Co element have a lifetime improvement effect, but the lithium byproduct remaining on the surface is consumed during a process of forming the coating layer, there is also an effect of reducing a side reaction caused by the lithium byproduct.

In this case, the coating raw material may be at least one selected from the group consisting of $Co(OH)_2$, CoO, $Co_2O_3$, $Co_3O_4$, CoO(OH), and $Co(OCOCH_3)_2$, and the coating raw material may be added in an amount of 1 mol% to 10 mol%, preferably, 2 mol% to 5 mol% based on a total number of moles of the primary sintered body.

The method of preparing positive electrode material powder may not include a washing step after the sintering. When preparing a high-Ni NCM oxide having an amount of nickel of 80 mol% or more, it is common to perform a washing process after sintering to remove a lithium byproduct present on surfaces of particles. However, since surface properties of the lithium nickel-based oxide deteriorate during the washing process to increase resistance, it is desirable that the method does not include the washing step.

Since the side reaction caused by the lithium byproduct may be prevented through cobalt coating in the present invention, the washing step may be omitted, and accordingly, the problem of increased resistance due to washing may be solved.

Also, a step of milling the sintered body may be performed after the secondary sintering. Specifically, the method of preparing positive electrode material powder according to the embodiment of the present invention may further include a step of milling a sintered body subjected to the secondary sintering at a speed of 1,000 rpm to 2,500 rpm, preferably, 1,200 rpm to 2,300 rpm.

The milling process is to remove large particles and obtain a particle size of the positive electrode material powder within a desired numerical range. Aggregation and/or agglomeration between adjacent particles may occur during the high-temperature sintering processes to generate large particles, and this may lead to deterioration in rolling properties. Thus, in the present invention, the large particles may be removed and positive electrode material powder having the above-described $D_{50}$ may be finally formed by performing the milling process.

The milling may be performed using a common milling method known in the art, for example, a jet-mill method, and the speed refers to a classifier speed.

It is desirable that the milling is performed in an atmosphere with low moisture content, for example, in a dry air atmosphere. The reason for this is that, when the lithium nickel-based oxide is exposed to moisture, generation of the lithium byproduct is increased and surface properties of the active material may be deteriorated.

## Positive Electrode

Next, a positive electrode according to the present invention will be described.

The positive electrode according to the present invention includes the above-described positive electrode material powder. Specifically, the positive electrode includes a positive electrode collector; and a positive electrode active material layer which is disposed on the positive electrode collector and includes the above positive electrode material powder. Since the positive electrode material powder has been described above, a description of the positive electrode material powder will be omitted and components excluding the positive electrode material powder will be described below.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500$\mu$m, and microscopic irregularities may be formed on the surface of the collector to improve the adhesion of the positive electrode material powder. The positive electrode collector, for example, may be used in various shapes such as that of a film, a sheet, a foil, a net, a porous body, a foam body, a nonwoven fabric body, and the like.

Also, the positive electrode active material layer may include a conductive agent and a binder in addition to the above-described positive electrode material powder.

The positive electrode material powder may be typically included in an amount of 80 wt% to 99 wt%, preferably 90 wt% to 98 wt%, and more preferably 95 wt% to 97 wt% based on a total weight of the positive electrode active material layer.

The conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon black such as acetylene black, Ketjen black, channel black, furnace black, lamp black, and thermal black; carbon-based materials such as carbon fibers and carbon nanotubes; powder or fibers of metal such as copper, nickel, aluminum, and silver;

conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.5wt% to 20 wt%, preferably 1 wt% to 10 wt%, and more preferably 1 wt% to 5 wt% based on the total weight of the positive electrode active material layer.

The binder improves the adhesion between the positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 0.5wt% to 20 wt%, preferably 1 wt% to 10 wt%, and more preferably 1 wt% to 5wt% based on the total weight of the positive electrode active material layer.

The positive electrode may be prepared according to a typical method of preparing a positive electrode. For example, after a positive electrode slurry is prepared by mixing the positive electrode material powder, the binder, and/or the conductive agent in a solvent and is coated on the positive electrode collector, the positive electrode may be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode material powder, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery specifically includes a positive electrode, a negative electrode including a negative electrode active material, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic material and the carbonaceous material such as a Si-C composite or a Sn-C composite, and any one thereof or a mixture of two or more thereof may be used.

In an embodiment of the present invention, the negative electrode active material may be graphite, the Si-containing material, or a mixture thereof, may specifically be graphite, and may more specifically be a mixture of artificial graphite and natural graphite. Also, a metallic lithium thin film may be used as the negative electrode active material. The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, preferably, 5 wt% or less based on the total weight of the negative electrode active material layer. The conductive agent is not particularly limited as long as it has conductivity without causing chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$. Specifically, the lithium salt may be at least one selected from the group consisting of $LiPF_6$, $LiN(SO_2F)_2$(LiFSI), $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, and $LiB(C_2O_4)_2$ and may more specifically be a mixture of $LiPF_6$ and $LiN(SO_2F)_2$ (LiFSI). A concentration of the lithium salt may be in a range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In a case in which the lithium salt is the mixture of $LiPF_6$ and $LiN(SO_2F)_2$(LiFSI), a molar ratio of $LiPF_6$:LiFSI may be in a range of 5:5 to 9:1, preferably, 6:4 to 8:2.

In order to improve life characteristics of the battery, suppress a reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

A shape of the lithium secondary battery of the present invention is not particularly limited, but a cylindrical type using a can, a prismatic type, a pouch type, or a coin type may be used.

As described above, since the lithium secondary battery including the positive electrode material powder according to the present invention stably exhibits high-temperature performance, the lithium secondary battery may not only be used in a battery cell that is used as a power source of a small device such as mobile phones, notebook computers, and digital cameras, but may also be preferably used as a unit cell of a battery module for a medium and large sized device which includes a plurality of battery cells.

Examples of the medium and large sized device may be a power tool, an electric vehicle, a hybrid electric vehicle, a plug-in hybrid electric vehicle, and a power storage system, but the medium and large sized device is not limited thereto.

According to another embodiment of the present invention, a battery module including the lithium secondary battery as a unit cell and a battery pack including the battery module are provided.

Hereinafter, examples of the present invention will be described in detail in such a manner that it may easily be carried out by a person with ordinary skill in the art to which the present invention pertains.

**[Examples: Preparation of Positive Electrode Material Powders]**

**Example 1.**

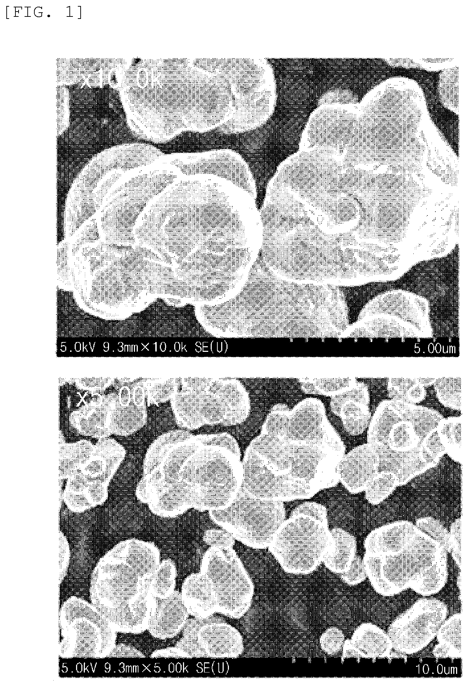

A precursor having a $D_{50}$ of about 5.0 μm and a composition represented by $Ni_{0.93}Co_{0.05}Mn_{0.02}(OH)_2$ and LiOH were put into a Henschel mixer (700L) and mixed at a center speed of 400 rpm for 20 minutes. In this case, the LiOH was added in an amount such that a molar ratio of Li: (Ni+Co+Mn) was 1.05:1. The mixed powder was put into an alumina crucible having a size of 330 mm × 330 mm, and subjected to primary sintering at a temperature of 800°C for 10 hours in an oxygen ($O_2$) atmosphere. Thereafter, 2 mol% of $Co(OH)_2$ was added based on a total number of moles of a primary sintered body and secondary sintering was performed at a temperature of 700°C for 10 hours to form a Co coating layer. Positive electrode material powder having a composition of $Li[Ni_{0.93}Co_{0.05}Mn_{0.02}]O_2$ was prepared by milling the sintered powder at a classification speed of 2,000 rpm in a dry air atmosphere using a jet-mill device. Images of the prepared positive electrode material powder observed using a scanning electron microscope at magnifications of 10.0k and 5.00k are attached in FIG. 1.

**Example 2.**

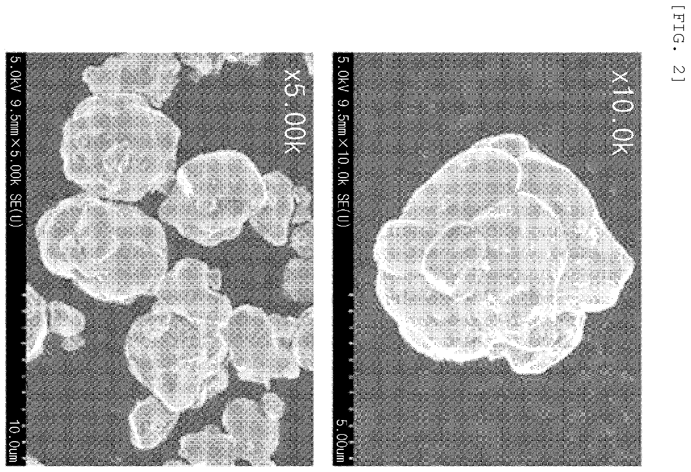

A precursor having a $D_{50}$ of about 5.0 μm and a composition represented by $Ni_{0.80}Co_{0.10}Mn_{0.10}(OH)_2$ and LiOH were put into a Henschel mixer (700L) and mixed at a center speed of 400 rpm for 20 minutes. In this case, the LiOH was added in an amount such that a molar ratio of Li: (Ni+Co+Mn) was 1.05:1. The mixed powder was put into an alumina crucible having a size of 330 mm × 330 mm, and subjected to primary sintering at a temperature of 800°C for 10 hours in an oxygen ($O_2$) atmosphere. Thereafter, 2 mol% of $Co(OH)_2$ was added based on a total number of moles of a primary sintered body and secondary sintering was performed at a temperature of 700°C for 10 hours. Positive electrode material powder having a composition of $Li[Ni_{0.80}Co_{0.10}Mn_{0.10}]O_2$ was prepared by milling the sintered powder at a classification speed of 2,000 rpm in a dry air atmosphere using a jet-mill device. Images of the prepared positive electrode material powder observed using a scanning electron microscope at magnifications of 10.0k and 5.00k are attached in FIG. 2.

**Comparative Example 1.**

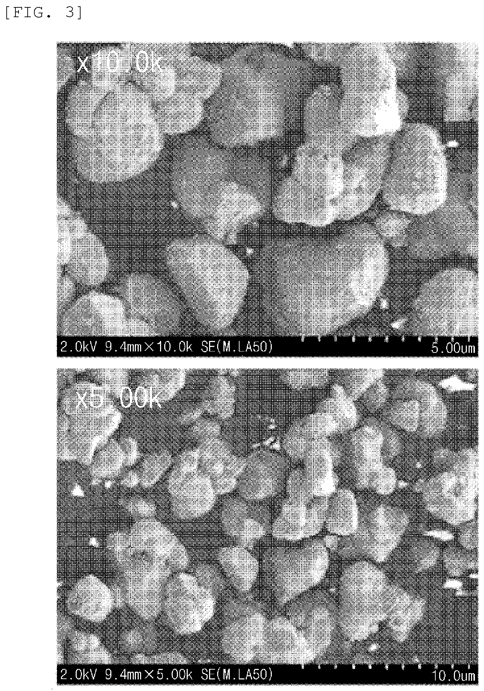

Positive electrode material powder was prepared in the same manner as in Example 1 except that a precursor having a $D_{50}$ of 3.5 μm was used. Images of the prepared positive electrode material powder observed using a scanning electron microscope at magnifications of 10.0k and 5.00k are attached in FIG. 3.

**Comparative Example 2.**

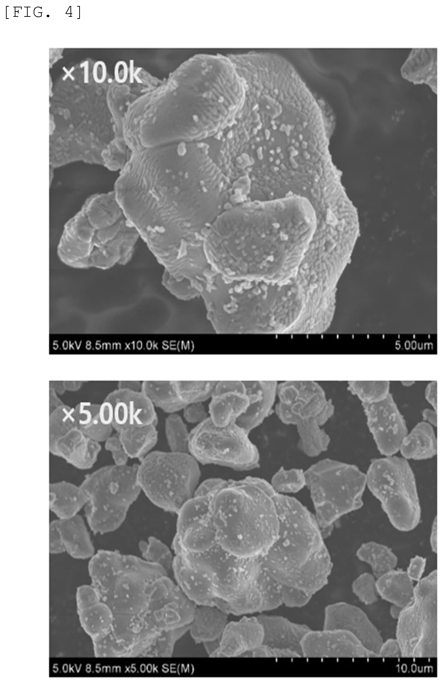

Positive electrode material powder was prepared in the same manner as in Example 1 except that secondary sintering was performed at 700°C for 8 hours. Images of the prepared positive electrode material powder observed using a scanning electron microscope at magnifications of 10.0k and 5.00k are attached in FIG. 4.

**Comparative Example 3.**

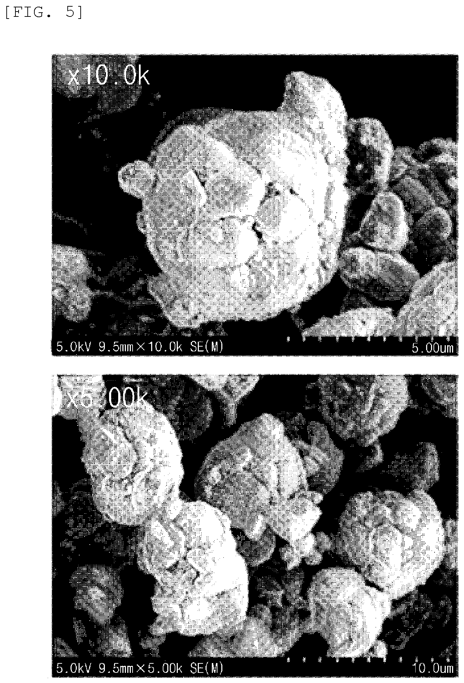

Positive electrode material powder was prepared in the same manner as in Example 1 except that secondary sintering was performed at 700°C for 15 hours. Images of the prepared positive electrode material powder observed using a scanning electron microscope at magnifications of 10.0k and 5.00k are attached in FIG. 5.

**Comparative Example 4.**

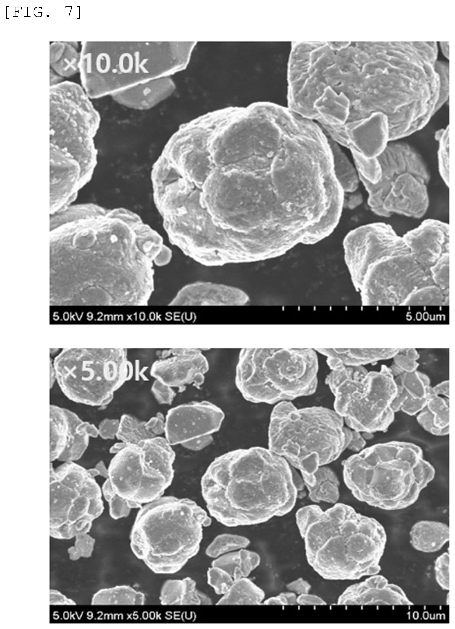

Positive electrode material powder was prepared in the same manner as in Example 1 except that a precursor having a $D_{50}$ of 4.3 $\mu$m was used. Images of the prepared positive electrode material powder observed using a scanning electron microscope at magnifications of 10.0k and 5.00k are attached in FIG. 7.

**[Experimental Examples]**

**Experimental Example 1. Powder Characterization**

**(1) Measurement of Particle Size Reduction Rate**

<u>Particle Size Analysis</u>

After dispersing 0.1 g of each of the positive electrode material powders prepared in the examples and the comparative examples in a dispersion medium, the dispersion medium was introduced into a laser diffraction particle size measurement instrument (Malvern Panalytical Ltd., Mastersizer 3000) and irradiated with ultrasonic waves of about 28 kHz at an output of 60 W to measure $D_{50}$, $D_{min}$, and $D_{max}$ of each positive electrode material powder. Measurement results are presented in Table 1 below.

<u>Crystal Strain and Cation Mixing Ratio</u>

XRD data obtained by performing X-ray diffraction analysis on each of the positive electrode material powders prepared in the examples and the comparative examples were analyzed using a Rietveld refinement method to measure crystal strain, a cation mixing ratio was obtained using an excess value of Ni which was confirmed after Rietveld refinement, and the results thereof are then listed in Table 1 below.

In this case, after putting a sample in a groove of a holder for general powder, leveling a surface of the sample using a slide glass, and filling the sample such that a sample height matches an edge of the holder, the X-ray diffraction analysis was performed using a fixed divergence slit (FDS) of 0.5° and a 2θ range of 15° to 90° under conditions, in which a step size was 0.02° and total scan time was about 20 minutes, using a Bruker D8 Endeavor (light source: CuKα, λ=1.54Å) equipped with a LynxEye XE-T position sensitive detector. Rietveld refinement was performed on the measured data in consideration of charge at each site (metals at transition metal sites are +3, Ni at a Li site is +2) and cation mixing. Instrumental broadening during the analysis used Fundamental Parameter Approach (FPA) implemented in a Bruker TOPAS program, and entire peaks in the measurement range were used during fitting. A peak shape was fitted using only Lorentzian contribution as a first principle (FP) among peak types available in the TOPAS.

<u>Measurement of $D_{50}$'</u>

3 g of each of the positive electrode material powders prepared in the examples and the comparative examples was collected and put in a circular mold having a diameter of 13 mm, and a force was applied until the force became 9 tons using an automatic pellet press (Auto Pellet Press, Carver, Inc., 3887.4) to prepare a pellet. After the prepared pellet was dispersed again in a dispersion medium, the dispersion medium was introduced into a laser diffraction particle size measurement instrument (Malvern Panalytical Ltd., Mastersizer 3000) and irradiated with ultrasonic waves of about 28 kHz at an output of 60 W to measure $D_{50}$ of each of the pressed positive electrode material powders. Measurement results are listed as $D_{50}$' in Table 1 below.

Calculation of Particle Size Reduction Rate

A particle size reduction rate, which was obtained by substituting $D_{50}$ and $D_{50}$' values measured as described aboveof each positive electrode material into Equation 1, was listed as K in Table 1 below.

**(2) Pellet Density and Tap Density**

Measurement of Pellet Density

3 g of each of the positive electrode material powders prepared in the examples and the comparative examples was collected and put in a circular mold having a diameter of 13 mm, and a force was applied until the force became 9 tons using an automatic pellet press (Auto Pellet Press, Carver, Inc., 3887.4) to prepare a pellet. After a height of the prepared pellet was measured and a volume of the pellet was calculated based on this, pellet density, which was calculated by dividing the weight of the positive electrode material powder by the volume of the pellet, was listed in Table 1 below.

Measurement of Tap Density

Tap density of each of the positive electrode material powders prepared in the examples and the comparative examples was measured using a GEOPYC 1360 tap density analyzer by Micromeritics Instrument Corporation. Specifically, 10 g of each of the positive electrode material powders prepared in the example and the comparative examples was collected and filled into a container having a diameter of 19 mm, the container was vibrated horizontally until a force of 108 N was applied to measure the tap density, and it was listed in Table 1 below.

[Table 1]

| | $D_{50}$ [μm] | $D_{min}$ [μm] | $D_{10}$ [μm] | $D_{90}$ [μm] | $D_{max}$ [μm] | $D_{50}$' [μm] | Crystal stra in [×10^-6] | Cation mixing ratio [at%] | K of Equation 1 | Tap density [g/cc] | Pellet density [g/cc] |
|---|---|---|---|---|---|---|---|---|---|---|---|
| Example 1 | 5.15 | 0.675 | 2.82 | 8.135 | 11.2 | 3.94 | 259 | 0.5 | 23.5 | 2.35 | 3.62 |
| Example 2 | 5.40 | 0.675 | 3.015 | 8.565 | 11.2 | 3.89 | 268 | 0.1 | 28.0 | 2.32 | 3.61 |
| Comparative Example 1 | 3.96 | 0.405 | 2.28 | 6.545 | 8.68 | 2.90 | 284 | 0.7 | 26.8 | 2.20 | 3.54 |
| Comparative Example 2 | 6.04 | 0.594 | 2.895 | 10.4 | 14.5 | 5.02 | 350 | 0.9 | 16.9 | 2.57 | 3.68 |
| Comparative Example 3 | 5.42 | 0.675 | 3.02 | 8.765 | 11.2 | 3.77 | 301 | 0.9 | 30.4 | 2.22 | 3.57 |
| Comparative Example 4 | 4.69 | 0.523 | 2.89 | 7.11 | 8.68 | 3.2 | 274 | 1.1 | 31.8 | 2.38 | 3.66 |

**Experimental** Example 2. **MonoCell Performance Evaluation**

(1) **Preparation of Mono Cell**

Each of the positive electrode material powders prepared in the examples and the comparative examples, carbon black as a conductive agent, and PVDF, as a binder, were mixed in a NMP solvent in a weight ratio of 96.5:1.5:2.0 to prepare a positive electrode slurry. One surface of an aluminum current collector was coated with the positive electrode slurry, dried at 130°C, and then rolled to prepare each positive electrode.
Graphite as a negative electrode active material, carbon black as a conductive agent, and a styrene-butadiene rubber (SBR), as a binder, were added to distilled water at a weight ratio of 95.0:3.5:1.5 to prepare a negative electrode slurry. One surface of a copper current collector was coated with the negative electrode slurry, dried at 130°C, and then rolled to prepare a negative electrode.
A mono cell was prepared by preparing an electrode assembly by disposing a porous polyethylene separator between the prepared positive electrode and negative electrode, disposing the electrode assembly in a battery case, and then injecting an electrolyte solution into the case. The electrolyte solution was prepared by dissolving 0.7 M $LiPF_6$ and 0.3

M LiFSI in a mixed organic solvent in which ethylene carbonate (EC):ethylmethyl carbonate (EMC) were mixed in a volume ratio of 3:7.

**(2) Cycle Characteristics Evaluation**

Charging of each of the mono cells prepared in (1) above at a constant current of 0.3 C to 4.2 V, charging of each mono cell at 0.05 C and a constant voltage, and then discharging of each mono cell at 0.3 C to 2.5 V were set as one cycle, and capacity retention and resistance increase rate were measured while a total of 600 cycles was performed.

Specifically, discharge capacities and resistances were measured in 1st, 100th, 300th, and 600th cycles, and discharge capacity retentions and resistance increase rates in the 100th, 300th, and 600th cycles relative to those in the 1st cycle were calculated, and the results thereof are listed in Table 2 below. CRC (cell cycler) 05-10 (WONIK PNE Co., LTD) was used as a measuring instrument.

**(3) Gas Generation Amount Evaluation**

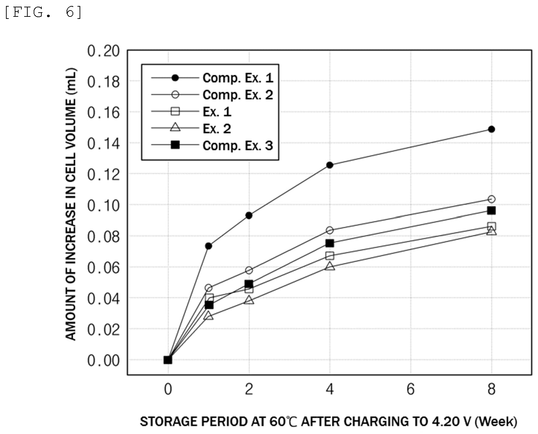

After a formation process was performed on each of the mono cells prepared in (1) above, each mono cell was charged at a constant current (CC) of 0.3 C (reference capacity 1 C = 40 mAh/g) to 4.20 V at 25°C, and then charged at a constant voltage (CV) until the charge current reached 0.05 C (cut-off current). Thereafter, while storing each mono cell in a chamber at 60°C, the mono cell was taken out of the chamber at one-week intervals and a change in volume was calculated by applying the Archimedes principle using a hydrometer (MATSUHAKU, TWD-150DM). The results thereof are illustrated in FIG. 6, and an average value of amounts of change in volume per week was calculated based on results measured over 8 weeks and listed in Table 2 below.

[Table 2]

| | Cycle characteristics | | | | | | Gas generation amount [$\mu\ell$ /we ek] |
|---|---|---|---|---|---|---|---|
| | Capacity retention (%) | | | Resistance increase rate (%) | | | |
| | 100cyc | 300cyc | 600cyc | 100cyc | 300cyc | 600cyc | |
| Example 1 | 93.32 | 86.80 | 77.18 | 15.54 | 40.35 | 101.46 | 46.2 |
| Example 2 | 93.43 | 86.57 | 76.52 | 14.78 | 34.21 | 91.94 | 54.6 |
| Comparative Example 1 | 93.49 | 86.20 | 72.48 | 8.66 | 26.46 | 118.315 | 75.2 |
| Comparative Example 2 | 93.01 | 85.78 | 74.65 | 25.20 | 58.43 | 182.99 | 57.4 |
| Comparative Example 3 | 92.55 | 84.32 | 68.00 | 19.78 | 45.93 | 149.53 | 60.7 |
| Comparative Example 4 | 91.92 | 83.57 | 69.26 | 25.42 | 70.57 | 287.06 | 74.3 |

According to results of Table 2 and FIG. 6, it may be confirmed that the cells using the positive electrode materials of Examples 1 and 2 having a $D_{50}$ of 5.0 $\mu$m or more and a crystal strain of $280 \times 10^{-6}$ or less exhibited better results in terms of capacity retention, resistance increase rate, and gas generation amount than the cells using the positive electrode materials of Comparative Examples 1 to 4.

According to Comparative Examples 1 to 3, it may be confirmed that, in a case in which the crystal strain was greater than $280 \times 10^{-6}$, the gas generation amount during high-temperature storage was simultaneously increased while life and resistance characteristics were degraded. Particularly, with respect to Comparative Examples 2 and 3 in which the particle size reduction rates were outside a range of 20% to 30%, it may be confirmed that life and resistance characteristics were further degraded compared to those of Comparative Example 1. With respect to Comparative Example 1 in which $D_{50}$ was less than 5.0$\mu$m, since the crystal strain was lower than that of Comparative Examples 2 and 3 and a particle size reduction rate was within a range of 20% to 30%, capacity retention was similar to that of the examples, but a resistance increase rate was more prominent as the number of cycles increased, and it may be confirmed that the gas generation amount was significantly increased.

Also, with respect to Comparative Example 4 in which $D_{50}$ was less than 5.0 $\mu$m, it was found that life and resistance characteristics were degraded in comparison to those of the examples even if crystal strain was $280 \times 10^{-6}$ or less and it may be confirmed a gas generation amount was also increased significantly.

**Claims**

1.  Positive electrode material powder comprising:

    a single particle type lithium nickel-based oxide in which an amount of nickel among metals excluding lithium is 80 mol% or more,
    wherein the positive electrode material powder has a $D_{50}$ of 5.0 $\mu$m or more, and
    has a crystal strain of $280 \times 10^{-6}$ or less.

2.  The positive electrode material powder of claim 1, wherein a cation mixing ratio of the positive electrode material powder is 1.0 at% or less.

3.  The positive electrode material powder of claim 1, wherein a particle size reduction rate (K) according to Equation 1 of the positive electrode material powder is in a range of 20% to 30%:

    [Equation 1]

    $$\text{Particle size reduction rate (K)} = \frac{D_{50} - D_{50}'}{D_{50}} \times 100 (\%)$$

    wherein, in Equation 1,

    $D_{50}$ is the $D_{50}$ of the positive electrode material powder, and
    $D_{50}'$ is $D_{50}$ measured after putting the positive electrode material powder into a circular mold with a diameter of 13 mm and pressing the positive electrode material powder with a force of 9 tons.

4.  The positive electrode material powder of claim 1, wherein the positive electrode material powder has a $D_{min}$ of 0.5 $\mu$m or more.

5.  The positive electrode material powder of claim 1, wherein the positive electrode material powder has a $D_{max}$ of 10 $\mu$m to 20 um.

6.  The positive electrode material powder of claim 1, wherein pellet density of the positive electrode material powder is 3.50 g/cc or more,
    wherein, after a pellet is prepared by putting the positive electrode material powder in a circular mold with a diameter of 13 mm and pressing the positive electrode material powder with a force of 9 tons, the pellet density is a value obtained by dividing a weight of the positive electrode material powder by a volume of the pellet.

7.  The positive electrode material powder of claim 1, wherein tap density of the positive electrode material powder is in a range of 2.00 g/cc to 2.50 g/cc.

8.  The positive electrode material powder of claim 1, wherein the lithium nickel-based oxide has a composition of Formula 1:

    [Formula 1]        $Li_{1+x}(Ni_aCo_bM^1_cM^2_d)O_2$

    wherein, in Formula 1,

    $M^1$ is Mn, Al, or a combination thereof,
    $M^2$ is at least one selected from the group consisting of Ba, Ca, Zr, Ti, Mg, Ta, Nb, Mo, W, Cu, Fe, V, Cr, Zn, In, Y, La, Sr, Ga, Sc, Gd, Sm, Ce, and B, and
    x, a, b, c, and d respectively satisfy $0 \leq x \leq 0.50$, $0.80 \leq a < 1$, $0 < b \leq 0.20$, $0 \leq c \leq 0.20$, $0 \leq d \leq 0.10$, and $a+b+c+d=1$.

9.  The positive electrode material powder of claim 1, wherein the amount of the nickel among the metals excluding lithium of the lithium nickel-based oxide is 85 mol% or more.

10. The positive electrode material powder of claim 1, further comprising a coating layer including a cobalt (Co) element on a surface of the lithium nickel-based oxide particle.

11. A method of preparing the positive electrode material powder of claim 1, the method comprising the steps of:

preparing a mixture by mixing a precursor having an amount of nickel of 80 mol% or more with a lithium raw material;
performing primary sintering on the mixture at 750°C to 890°C; and
performing secondary sintering on a sintered body subjected to the primary sintering at 660°C to 750°C for 9 hours to 14 hours.

12. The method of claim 11, further comprising a step of milling a sintered body subjected to the secondary sintering at a speed of 1,000 rpm to 2,500 rpm.

13. The method of claim 11, wherein the method does not comprise a washing step after the secondary sintering.

14. A positive electrode comprising the positive electrode material powder of claim 1.

15. A lithium secondary battery comprising the positive electrode of claim 14; a negative electrode including a negative electrode active material; a separator disposed between the positive electrode and the negative electrode; and an electrolyte.

[FIG. 1]

[FIG. 2]

[FIG. 3]

[FIG. 4]

[FIG. 5]

[FIG. 6]

[FIG. 7]

# EP 4 765 248 A1

## INTERNATIONAL SEARCH REPORT

International application No.

**PCT/KR2025/001500**

### A. CLASSIFICATION OF SUBJECT MATTER

**H01M 4/525**(2010.01)i; **H01M 4/131**(2010.01)i; **H01M 4/36**(2006.01)i; **H01M 10/052**(2010.01)i; **C01G 53/50**(2025.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 10/0525(2010.01); H01M 10/0562(2010.01); H01M 10/0566(2010.01); H01M 4/131(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극재(positive electrode material), 리튬 니켈계 산화물(lithium nickel oxide), 결정 변형도(crystal strain), 양이온 혼합률(cation mixing ratio), 입도 감소율(particle size reduction ratio), 펠렛 밀도(pellet density), 코팅층(coating layer), 소성(firing)

### C. DOCUMENTS CONSIDERED TO BE RELEVANT

| Category* | Citation of document, with indication, where appropriate, of the relevant passages | Relevant to claim No. |
|---|---|---|
| X | JP 2016-115621 A (SUMITOMO METAL MINING CO., LTD.) 23 June 2016 (2016-06-23) See paragraphs [0003]-[0020], [0037]-[0039], [0055]-[0062] and [0069]-[0090]; and table 1. | 1,7-9,14-15 |
| Y | | 2-6,10-13 |
| Y | KR 10-2023-0162569 A (LG CHEM, LTD.) 28 November 2023 (2023-11-28) See paragraphs [0119]-[0133], [0157] and [0218]-[0221]; and table 1. | 2,10-13 |
| Y | KR 10-2023-0005894 A (BEIJING EASPRING MATERIAL TECHNOLOGY CO., LTD.) 10 January 2023 (2023-01-10) See paragraphs [0043], [0083]-[0084], [0143]-[0144] and [0174]-[0181]. | 3-6 |
| A | JP 6428648 B2 (SANYO ELECTRIC CO., LTD.) 28 November 2018 (2018-11-28) See entire document. | 1-15 |

☑ Further documents are listed in the continuation of Box C.     ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 May 2025** | **01 May 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2025/001500** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2020-0022490 A (MITSUI MINING & SMELTING CO., LTD.) 03 March 2020 (2020-03-03)<br>See entire document. | 1-15 |
| PX | KR 10-2024-0099088 A (LG ENERGY SOLUTION, LTD.) 28 June 2024 (2024-06-28)<br>See paragraphs [0088]-[0107] and [0132]-[0135]; claims 1-7; and table 1. | 1-2,8-9,11-15 |
| PX | KR 10-2024-0093384 A (LG ENERGY SOLUTION, LTD.) 24 June 2024 (2024-06-24)<br>See paragraphs [0046]-[0055] and [0144]; and claims 1-2 and 9-12. | 1,7-10,14-15 |

Form PCT/ISA/210 (second sheet) (July 2022)

**INTERNATIONAL SEARCH REPORT**
**Information on patent family members**

International application No.

**PCT/KR2025/001500**

| Patent document cited in search report | | | Publication date (day/month/year) | Patent family member(s) | | | Publication date (day/month/year) |
|---|---|---|---|---|---|---|---|
| JP | 2016-115621 | A | 23 June 2016 | JP | 6362033 | B2 | 25 July 2018 |
| KR | 10-2023-0162569 | A | 28 November 2023 | CN | 119137072 | A | 13 December 2024 |
| | | | | EP | 4501859 | A1 | 05 February 2025 |
| | | | | WO | 2023-224447 | A1 | 23 November 2023 |
| KR | 10-2023-0005894 | A | 10 January 2023 | CN | 115548277 | A | 30 December 2022 |
| | | | | EP | 4145566 | A1 | 08 March 2023 |
| | | | | JP | 2023-516229 | A | 18 April 2023 |
| | | | | JP | 7313578 | B2 | 24 July 2023 |
| | | | | KR | 10-2640467 | B1 | 23 February 2024 |
| | | | | US | 12113214 | B2 | 08 October 2024 |
| | | | | US | 2023-0207802 | A1 | 29 June 2023 |
| | | | | US | 2023-0268498 | A1 | 24 August 2023 |
| | | | | WO | 2022-198891 | A1 | 29 September 2022 |
| JP | 6428648 | B2 | 28 November 2018 | WO | 2015-115088 | A1 | 06 August 2015 |
| KR | 10-2020-0022490 | A | 03 March 2020 | CN | 111033830 | A | 17 April 2020 |
| | | | | EP | 3678233 | A1 | 08 July 2020 |
| | | | | JP | 6864104 | B2 | 21 April 2021 |
| | | | | KR | 10-2363650 | B1 | 17 February 2022 |
| | | | | US | 2021-0159496 | A1 | 27 May 2021 |
| | | | | WO | 2019-044734 | A1 | 07 March 2019 |
| KR | 10-2024-0099088 | A | 28 June 2024 | WO | 2024-136480 | A1 | 27 June 2024 |
| KR | 10-2024-0093384 | A | 24 June 2024 | CN | 119234328 | A | 31 December 2024 |
| | | | | EP | 4513592 | A1 | 26 February 2025 |
| | | | | KR | 10-2783275 | B1 | 19 March 2025 |
| | | | | US | 12191488 | B2 | 07 January 2025 |
| | | | | US | 2024-0213471 | A1 | 27 June 2024 |
| | | | | US | 2025-0070156 | A1 | 27 February 2025 |
| | | | | WO | 2024-128866 | A1 | 20 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240014418